Europäisches Patentamt

European Patent Office

Office européen des brevets

(11) Publication number: **0 278 133**
**A1**

## (12) EUROPEAN PATENT APPLICATION

(21) Application number: **87301117.5**

(22) Date of filing: **09.02.87**

(51) Int. Cl.⁴: **G06F 3/06**

(43) Date of publication of application:
**17.08.88 Bulletin 88/33**

(84) Designated Contracting States:
**DE FR GB NL**

(71) Applicant: **INDUSTRIAL TECHNOLOGY
RESEARCH INSTITUTE
No.195-4 Sec. 4 Chung Hsing Road Chu-Tung
Chen
Hsin-Chu Hsien 311(TW)**

(72) Inventor: **Huang, Kuoan
195, Chung Hsin Road Sec. 4,
Chu Tung, Hsin Chu Hsien(TW)**
Inventor: **Liu, Jung-Lung
195, Chung Hsin Road Sec. 4,
Chu Tung, Hsin Chu Hsien(TW)**

(74) Representative: **Arthur, Bryan Edward et al
Withers & Rogers 4 Dyer's Buildings Holborn
London EC1N 2JT(GB)**

(54) Features expander for CD player connected with microcomputer and TV set.

(57) It is a features expander for a CD player, which mainly includes a micro-processor, and which is connected with an external CD player, a TV set, and a computer so as to form a system that can read out and display the graphics, voice, and characters stored on a compact-disc.

EP 0 278 133 A1

# FEATURES EXPANDER FOR CD PLAYER CONNECTED WITH MICROCOMPUTER AND TV SET

At the present time, the general compact-disc- (CD) player, TV set, and computer for family use are of a monofunction products, each of them can only provide the user with a specific visual or listening function, being unable to provide an integrated function. Further, the CD that can store a considerable voice or character data has widely been used; particularly, the cheap compact-disc read-only memories (CD-ROM) has become a useful memory means; however, the device of decoding the data on CD-ROM is a special machine; that special machine can, of course, provide a complete function with audio, videotex and graphic images, but it is rather expensive so far as the general consummer is concerned. The general current CD player is unable to process those special data on CD-ROM; therefore, if a control device is developed to combine the functions of a family computer, a TV set, and a general CD player for processing the data on CDs, it will be a practical device.

This invention provides an operation control unit as features expander for a general CD player to achieve the functions as special CD-ROM machines, i.e., a CD player with the control unit can provide a function the same as that of a special CD-ROM machine instead of its mono-function. The control unit comprises mainly a micro-processor to be connected, through interfaces, with an external CD player, a TV set, and a computer so as to read out and display data of graphics, voices or characters stored on CDs.

The special feature of the present invention is on the virtual machine code of the micro-processor in the control unit; by means of the virtual machine code, a direct memory access (DMA) circuit is formed so as to simplify the structure, reduce the cost and to increase the reliability of the system.

An embodiment of this invention is described by way of example, with reference to the drawings in which:

Fig. 1 is a system connection view according to the present invention.

Fig. 2 is a block diagram of the circuit of the present invention.

Fig. 3 is a block diagram of the DMA circuit of the present invention.

The object of the present invention is to overcome the aforesaid problems with a control unit for a CD player so as to increase the functions thereof. The control unit is used for connecting a CD player, a computer and a TV set so as to provide a combined functions of voice and video; its structure and features are described in detail, with reference to the drawings, as follows:

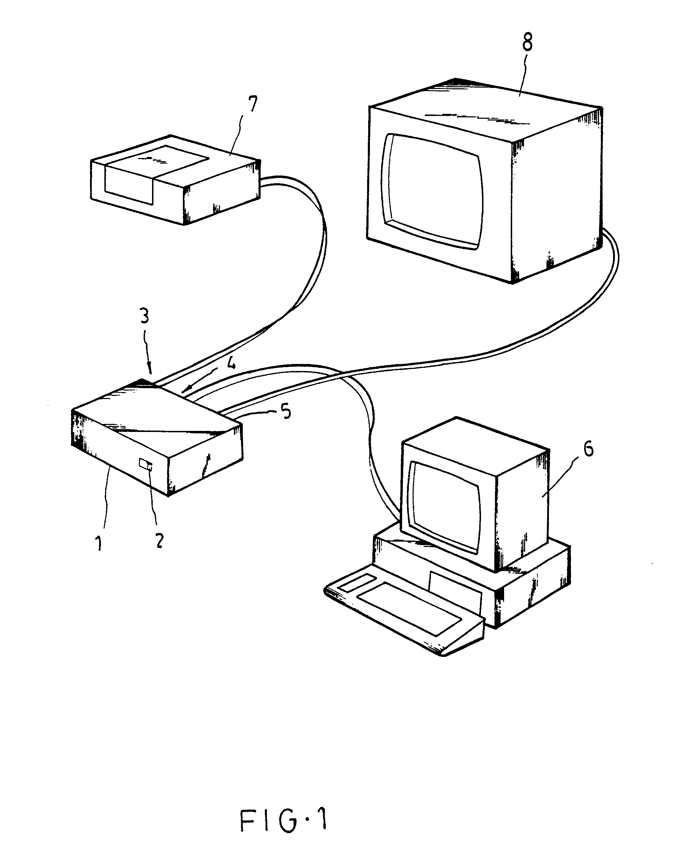

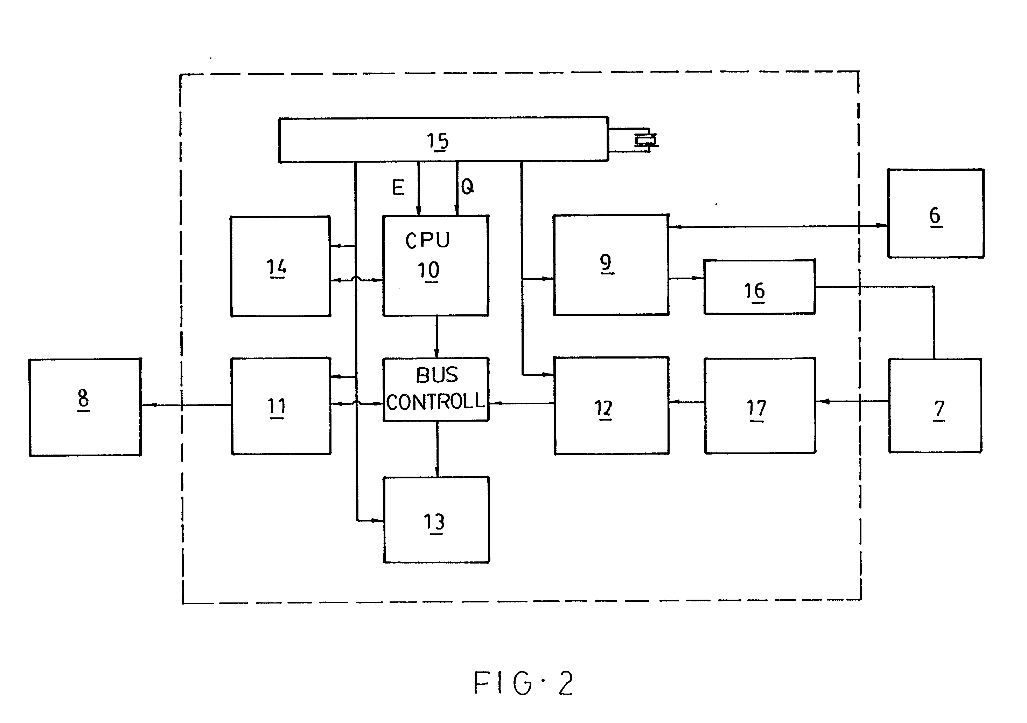

Referring to Figs. 1 and 2, there is shown a control unit 1 for increasing the functions of a CD player; the outer surface of the control unit 1 is furnished with a power switch 2, a connector 3 for the wire of a CD player, a connector 4 for the wire of a main computer, and a connector 5 for the wire of a TV set; by means of the afore said connectors, the control unit is connected with an external computer 6, a CD player 7 and a TV set 8. The inner portion of the control unit 1 comprises a parallel input/output interface 9, a CPU 10, a color graphic circuit 11, a DMA circuit 12, a RAM 13, a ROM 14, a timing and addressing signal generator 15, a CD player control circuit 16, and a serial parallel converter 17.

The operation flow chart of the control unit is as follows:

1. The instructions from the external computer 6 is transmitted, through the parallel input/output interface 9, to the CPU 10, which will execute the instructions; the instruction will also, through the parallel input/output interface 9 and control circuit 16, control the CD player 7 to read the data of a picture, graph, voice or words stored on the disc.

2. The DMA circuit 12 stores the data obtained from the disc into RAM 13.

3. CPU 10 will timely read the data from RAM 13 and transmit the data, through the interface 9, to the external computer 6 so as to fulfil the index search from CD.

4. The DMA circuit 12 will read the graphic data on the disc and store into RAM 13; then, the data is to be processed with CPU 10, and will be displayed on TV set 8 through the color graphic circuit 11.

The feature of the present invention is especially placed in the DMA circuit. Generally, there are two methods for storing the outer data into a memory means, i.e., 1, being controlled with a software through CPU; 2, direct memory access. The former method is unable to meet the requirement of high speed transmission of data according to the present invention, while the latter, a known direct memory access circuit, has to use a counter with bus arbitror to generate an address bus and transfer the data; as a result, will have a complicated circuit structure to lower the reliability of the system, and therefore it is not suitable for the present invention.

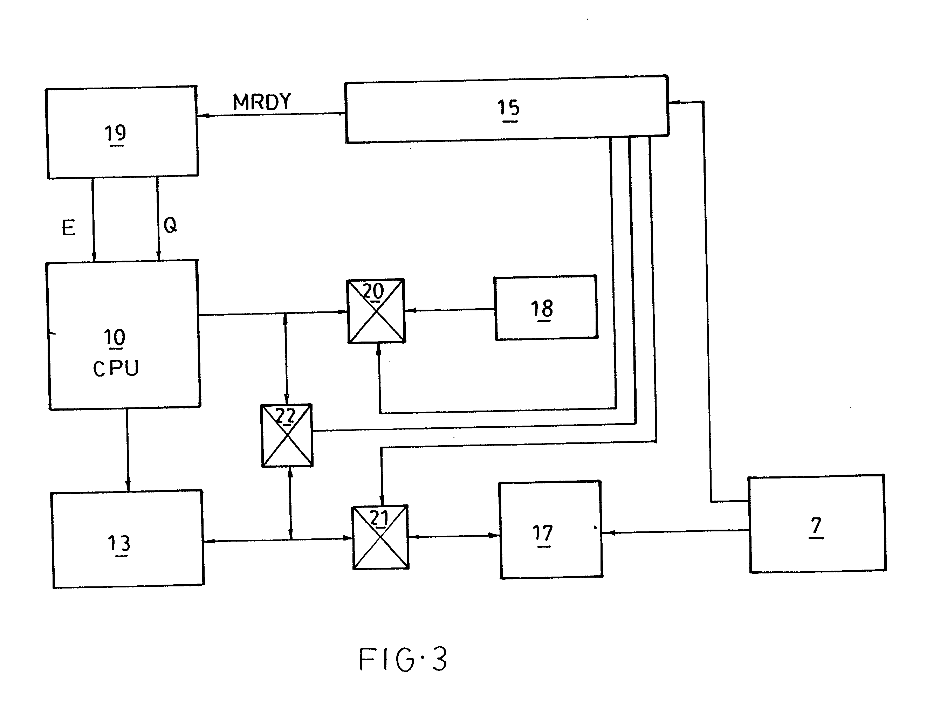

Fig. 3 illustrates a new and original DMA structure of the present invention, in which the CPU 10 is furnished with a virtual machine code 18 (10 or 11 of the hexa-decimal numeral). Upon picking CD data, the timing and addressing signal generator 15 will, in accordance with the synchronous signal of the CD record to control the E.Q. signal controller 19, generate a clock pulse to be synchronous with the data on CD record and provide CPU 10 with that clock pulse; in that case, the switch 22 is turned off, while switch 20 is turned on so as to let the micro-processor and the data on CD record generate a synchronous address signal. Simultaneously, switch 21 is turned on to have the CD data directly stored into RAM 13. After the data being stored therein, switch 22 is turned on, while switches 20 and 21 are turned off. CPU 10 can again read the CD data in RAM 13. Thus, the simple structure according to the present invention can fulfil the DMA operation so as to increase the reliability of the system.

Summing up the aforesaid facts, it is deemed that the operation control unit of a CD player according to the present invention can display CD-ROM voice, and characters by means of its components such as TV set connecting interface, the external computer connecting interface, and the CD player connecting interface, and by means of its microprocessor control for the process and transmission of the voice, graphics and documents on CD; in other words, it can combine the functions of a CD player, a TV set, and a family computer to become a system to provide video, voice and information operation, and therefore it is considered a highly practical disclosure.

### Claims

1. A feature expander for a CD player comprising mainly a micro-processor to be connected electrically with an interface of a family computer, an interface of a TV set, and an interface of a CD player; and said micro-processor controlling said CD player to read the data of voice, graphics, and documents on CDs, and then having said data transmitted to the family computer or TV set to display graphics or characters thereon.

2. A feature expander as claimed in claim 1, wherein said micro-processor comprising:
a CPU;
a parallel input/output interface through whcih the instructions of an external computer is transmitted to said CPU to perform said instructions with corresponding operations; and said instructions being transmitted, through said parallel input/ output interface, to control said CD player to read the data of voice or document on CD;
a RAM;
a DMA circuit through which the CD data are stored into said RAM; and said CD data being timely read by said CPU and being transmitted, through said parallel input/output interface, to the external computer so as to fulfil the search operation of data index on CD;
a color graphic circuit being used to display on an external TV set, the graphic data which has been pick ed up from said CD by said DMA circuit stored in said RAM, and processed by CPU.

3. A micro-processor as claimed in claim 2, wherein said DMA circuit can control said timing signal generator by means of a virtual machine code of said CPU; and a clock pulse of said CPU being generated by means of the synchronous signal of said CD; and simultaneously controlling the switches for CD data storing in or reading out from said RAM.

FIG·1

FIG·2

0 278 133

FIG·3

CPU
10

13

19

E

Q

MRDY

22

21

20

17

18

15

7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 165 320 (NAKAMURA et al.)<br>* Figure 10; page 14, line 3 - page 15, line 13 * | 1 | G 06 F 3/06 |
| A | | 2,3 | |
| | --- | | |
| A | EP-A-0 137 855 (SUZUKI et al.)<br>* Figure 7; page 17, line 23 - page 21, line 24 * | 1-3 | |
| | --- | | |
| A | COMPCON 85, THIRTIETH IEEE COMPUTER SOCIETY INTERNATIONAL CONFERENCE, San Francisco, California, 25th-28th February 1985, pages 39-42, IEEE, US; B. GALL: "A 600 Mbyte compact disc read-only memory. A potential break-through in low cost mass data distribution"<br>* Page 39, right-hand column, line 26 - page 40, left-hand column, line 15; figure 2 * | 1 | |

| | | | TECHNICAL FIELDS SEARCHED (Int. Cl.4) |
|---|---|---|---|
| | ----- | | G 06 F<br>H 04 B |

The present search report has been drawn up for all claims

| Place of search | Date of completion of the search | Examiner |
|---|---|---|
| THE HAGUE | 28-08-1987 | MOENS R.A.A. |